# EUROPÄISCHE PATENTSCHRIFT

(11) **EP 0 858 570 B1**
(45) Veröffentlichungstag und Bekanntmachung des Hinweises auf die Patenterteilung: **10.01.2001**
(21) Anmeldenummer: 96934803.6
(22) Anmeldetag: 24.10.1996
(51) Int. Cl.: F16L 37/084, F16L 37/133

(54) **LÖSBARE STECKVERBINDUNG ZUR AUFNAHME EINES ROHRFÖRMIGEN EINSTECKTEILS**
DETACHABLE PLUG-IN CONNECTION FOR RECEIVING A TUBULAR PLUG-IN PART
SYSTEME D'ACCOUPLEMENT AMOVIBLE POUR RECEVOIR UNE PIECE TUBULAIRE MALE

(30) Priorität: 02.11.1995 DE 19540784
(43) Veröffentlichungstag der Anmeldung: 19.08.1998
(73) Patentinhaber: A. Raymond & Cie, 38028 Grenoble (FR)
(72) Erfinder: HÄNSEL, Mathias, F-79595 Rümmingen (DE)
(74) Vertreter: Kirchgaesser, Johannes, Dipl.-Ing.
(86) Internationale Anmeldenummer: EP9604614
(87) Internationale Veröffentlichungsnummer: WO9716672

(56) Entgegenhaltungen:
- EP-A- 0 605 801
- DE-A- 3 727 858
- US-A- 3 990 727
- US-A- 4 632 436
- US-A- 5 074 601

## Beschreibung

Die Erfindung bezieht sich auf eine lösbare Steckverbindung zur Aufnahme eines rohrförmigen Einsteckteils mit einer umlaufenden Halterippe gemäß dem Oberbegriff des Hauptanspruchs. Das Einsteckteil kann hierbei sowohl das Ende eines stabilen Metallrohres sein, welches beispielsweise für Kraftstoffleitungen verwendet wird. Es kann aber auch aus starrem Kunststoff oder anderem gängigen Spritzgußmaterial bestehen, welches in bekannter Weise mit einer Schlauch- oder Rohrleitung verbindbar ist.

Aus der **EP 0 605 801 A1** ist eine solche Steckverbindung bekannt, bei welcher die kreisbogenförmigen Stirnflächen der Stützkörper vertikal zur Gehäuseachse radial nach außen gerichtet sind. Mit diesen Stirnflächen liegen die Stützkörper an der eingangsseitigen Innenfläche der Aussparung an, wenn auf das Einsteckteil eine Zugkraft ausgeübt wird. Wie sich in der Praxis gezeigt hat, reicht die hierdurch erzeugte Haltekraft für die Sicherheit der Kraftstoffkupplungen nicht mehr aus. Beim Auftreten hoher Zugkräfte auf das Einsteckteil führt dies zum vorzeitigen seitlichen Abgleiten der Stützkörper und dadurch zum Lösen der Kupplung.

Die Aufgabe der Erfindung besteht darin, die vorliegende Steckverbindung so zu gestalten, daß die aus Sicherheitsgründen erforderlichen Haltekräfte gut erreicht werden. Diese Aufgabe wird durch die im Anspruch 1 angegebene Erfindung gelöst, wobei der Winkel zwischen den kreisbogenförmigen Stirnflächen der Stützkörper und der Vertikalebene vorzugsweise zwischen 25° und 45° liegt.

Durch die erfindungsgemäße Abschrägung der Stirnflächen wird beim Auftreten von Zugkräften an der Innenkante der Aussparung eine Keilwirkung erreicht. Je höher die Zugkräfte, desto stärker werden die Stützkörper gegen die Halterippe gedrückt. Auf diese Weise konnten die Haltekräfte auf mehr als das Doppelte gesteigert werden.

Nach einem weiteren Merkmal der Erfindung können die an der Halterippe anliegenden Halteflächen der Haltekanten entgegen der Einsteckrichtung nach außen hin abgeschrägt sein, so daß die Haltekanten möglichst nahe am Grund der Halterippen anliegen.

Ein Ausführungsbeispiel der Erfindung ist in der Zeichnung dargestellt und soll nachfolgend näher erläutert werden. Es zeigt
- Fig. 1: ein zusammengebautes Steckverbindungsgehäuse im Längsschnitt nach dem Eindrücken des Einsteckteils im unbelasteten Zustand,
- Fig. 2: die gleiche Montagesituation beim Einwirken von Zugkräften auf das Einsteckteil,
- Fig. 3: die Haltefeder in einer Seitenansicht mit Teilschnitt durch den oberen Stützkörper,
- Fig. 4: die gleiche Haltefeder in Vorderansicht und
- Fig. 5: eine Explosionszeichnung des Steckverbindungsgehäuses mit den zugehörigen Einzelteilen vor dem Zusammenbau.

Die in den Figuren dargestellte Steckverbindung besteht aus einem Aufnahmegehäuse 1 und einer Haltefeder 2, welche aus hartelastischem Kunststoffmaterial hergestellt ist. Die Steckverbindung dient zur Aufnahme eines rohrförmigen Einsteckteils 3, welches mit einer umlaufenden Halterippe 4 versehen ist. Dieses Einsteckteil 3 kann sowohl das Ende eines Leitungsrohres aus starrem Werkstoff als auch ein starres Zwischenstück sein, das in bekannter Weise mit dem Ende eines Leitungsrohres aus weicherem Material verbindbar ist.

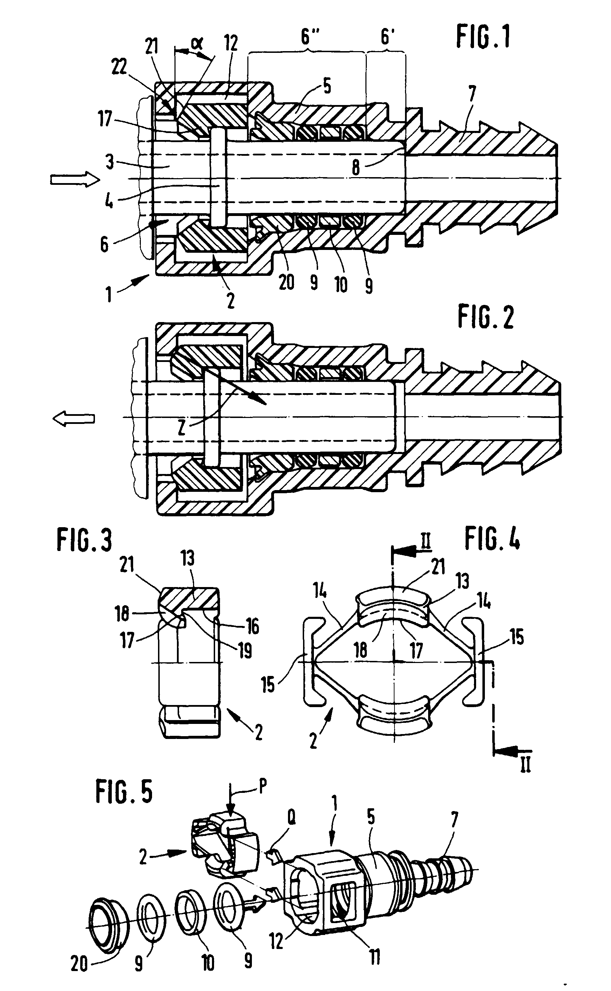

Das Aufnahmegehäuse 1 besteht gemäß Figur 1 aus einer zylindrischen Gehäusewand 5 mit einem in mehreren Stufen abgesetzten Aufnahmeraum 6 für das Einsteckteil 3, einem Anschlag 8 am Ende des Aufnahmeraumes 6 und einem in axialer Verlängerung daran angesetzten, zylindrischen Stutzen 7 zum Anschluß an eine nicht dargestellte Verbindungsleitung für Flüssigkeiten. Der Aufnahmeraum 6 beginnt mit einem Bereich 6', dessen Innendurchmeser dem Außendurchmesser des Einsteckteils 3 entspricht. Dem schließt sich ein im Durchmesser erweiterter Bereich 6" an, der zur Aufnahme von zwei Dichtungsringen 9, einem Zwischenring 10 und einem Distanzring 20 vorgesehen ist, dessen Innendurchmesser wiederum dem Außendurchmesser des Einsteckteils 3 entspricht.

Im vorderen Einführbereich des Aufnahmegehäuses 1 befinden sich in der Gehäusewand 5 zwei diametral gegenüberliegende Öffnungen 11 (siehe Fig. 5) sowie quer dazu zwei Aussparungen 12, welche zum Einführen und Festlegen der nachfolgend beschriebenen Haltefeder 2 dienen.

Diese Haltefeder 2 setzt sich, wie aus Figur 4 ersichtlich, zusammen aus zwei kreisbogenförmigen Stützkörpern 13, die an ihren Enden über V-förmig zusammengeführte Federstege 14 untereinander verbunden sind, wobei die Verbindungsstellen mit rechteckigen Druckplatten 15 abgedeckt sind, welche geringfügig schmaler sind als die Gehäuseöffnung 11.

Die Stützkörper 13 sind an ihren einander zugekehrten Innenwänden 16 kreisbogenförmig dem Außendurchmesser den Halterippen 4 angepaßt und weisen zwei radial nach innen gerichtete, kreisbogenförmige Haltekanten 17 mit auf der Einsteckseite abgeschrägten Einführflächen 18 und zur entgegengesetzten Seite radial abgesetzten Halteflächen 19 auf, welche die Halterippe 4 des Einsteckteils 3 im eingedrückten Zustand hintergreifen. Die Halteflächen 19 sind vorzugsweise nach außen entgegen der Einsteckrichtung leicht abgeschrägt, so daß die Haltekanten 17 möglichst nahe am Grund der Halterippe 4 anliegen.

Die Stützkörper 13 sind außerdem mit kreisbogenförmigen Stirnflächen 21 versehen, welche von der Innenkante 22 der Aussparung 12 entgegen der Einsteckrichtung gehalten werden. Diese Stirnflächen 21 sind im Bereich der Anlage in Einsteckrichtung nach außen gegen die Vertikalebene um einen Winkel α zwischen 15° und 60° abgeschrägt, wobei der Winkel α vorzugsweise zwischen 25° und 45° liegt. Dadurch wird erreicht, daß beim Auftreten von Zugkräften auf das Einsteckteil 3 die Stirnflächen 21, wie aus Fig. 2 ersichtlich, von der Innenkante 22 in Richtung des Pfeiles "Z" nach innen gedrückt wird, so daß die Haltefeder 2 sich mit ihren Haltekanten 17 noch fester an der Halterippe 4 abstützt.

Die Innenkante 22 ist hierbei vorteilhafterweise abgerundet. Sie kann aber auch mit einer Schrägfläche versehen sein, deren Winkel etwa dem Winkel α entspricht. Dadurch wird das Entlanggleiten der Stirnfläche 21 deutlich erleichtert.

Zum Einführen der Haltefeder 2 in den Aufnahmeraum 6 werden die Stützkörper 13 zunächst, wie in Figur 5 gezeigt, in Pfeilrichtung "P" zusammengedrückt. Sodann wird die Haltefeder 2 mit der Druckplatte 15 vorweg in Pfeilrichtung "Q" in die eine Öffnung 11 der Gehäusewand 5 eingeführt und durch den Aufnahmeraum 6 durchgedrückt. Sobald die Stützkörper 13 die Öffnung 11 passiert haben, streben diese aufgrund der Rückstellkraft der Federstege 14 in ihre entspannte Ausgangslage zurück und tauchen, wenn sie in der Mitte des Aufnahmeraumes 6 angekommen sind, in die Aussparungen 12 soweit ein, daß sie in axialer Richtung abgestützt sind.

Zwischen den Stegen 14 und der Aussparung 12 muß noch genügend Platz verbleiben, damit die Stützkörper 13 beim Eindrücken des Einsteckteils 3 seitlich ausweichen können. Dies geschieht automatisch dann, wenn die Halterippe 4 beim Eindrücken des Einsteckteils 3 über die Einführflächen 18 gleitet, so daß die Haltekanten 17 nach außen gedrückt werden. Sobald das Einsteckteil 3 mit seiner Stirnseite am Anschlag 8 des Aufnahmeraumes 6 anstößt, federn die Stützkörper 13 wieder in ihre Ausgangslage zurück und die Haltekanten 17 legen sich mit den Halteflächen 19 an der Rückseite der Halterippe 4 an, so daß das Einsteckteil 3 in der Steckverbindung gesichert ist.

Will man die Steckverbindung lösen, so müssen die Druckplatten 15 soweit zusammengedrückt werden, bis die Haltekanten 17 weit genug auseinandergeführt sind, daß die Halterippe 4 von den Haltekanten 17 nicht mehr hintergriffen wird. Nun kann das Einsteckteil 3 mühelos aus dem Aufnahmegehäuse 1 herausgezogen werden.

## Patentansprüche

1. Lösbare Steckverbindung zur Aufnahme eines rohrförmigen Einsteckteils ( 3) mit einer umlaufenden Halterippe ( 4 ), bestehend aus einem zylindrischen Aufnahmegehäuse ( 1 ) mit einem zentralen Aufnahmeraum ( 6 ) zum Einführen des Einsteckteils ( 3 ) und aus einer separaten Haltefeder ( 2 ) aus hartelastischem Kunststoff mit kreisbogenförmig nach innen gerichteten, elastisch auffederbaren Haltekanten ( 17) zum Hintergreifen der Halterippe ( 4 ) nach dem Eindrücken des Einsteckteils ( 3 ), wobei die Haltefeder ( 2 ) durch eine Öffnung ( 11 ) in der zylindrischen Gehäusewand ( 5) des Aufnahmegehäuses ( 1 ) in den Aufnahmeraum ( 6) einführbar und zum Lösen des Einsteckteils ( 3 ) im Öffnungsbereich ( 11 ) der Gehäusewand ( 5) von außen eindrückbar ist, und wobei an den Haltekanten ( 17 ) nach außen abstehende Stützkörper ( 13 ) angeformt sind, welche im eingebauten Zustand zur axialen Festlegung der Haltefeder ( 2 ) im Aufnahmegehäuse ( 1 ) in entsprechende Aussparungen ( 12 ) der Gehäusewand ( 5 ) eintauchen und dort mit ihren ebenfalls kreisbogenförmigen Stirnflächen ( 21 ) von der Innenkante ( 22) der Aussparung ( 12 ) entgegen der Einsteckrichtung gehalten werden, **dadurch gekennzeichnet**, daß die Stirnflächen ( 21 ) im Bereich der Anlage in Einsteckrichtung nach außen gegen die Vertikalebene um einen Winkel a zwischen 15° und 60° abgeschrägt sind.

2. Lösbare Steckverbindung nach Anspruch 1, dadurch gekennzeichnet, daß der Winkel α zwischen 25° und 45° liegt.

3. Lösbare Steckverbindung nach Anspruch 1 oder 2, dadurch gekennzeichnet, daß die an der Halterippe ( 4 ) anliegenden Halteflächen ( 19 ) der Haltekanten ( 17 ) entgegen der Einsteckrichtung nach außen hin abgeschrägt sind, so daß die Haltekanten ( 17) möglichst nahe am Grund der Halterippe ( 4 ) anliegen.

4. Lösbare Steckverbindung nach Anspruch 1 oder 2, dadurch gekennzeichnet, daß die Innenkanten ( 22) abgerundet oder mit einer Schrägfläche versehen sind, deren Winkel etwa dem Winkel α entspricht.

## Claims

1. A releasable plug connection for receiving a tubular insertion portion (3) having a peripherally extending holding rib (4), comprising a cylindrical receiving housing (1) with a central receiving space (6) for the introduction of the insertion portion (3) and a separate holding spring (2) of hard-elastic plastic material with holding edges (17) which are directed inwardly in an arcuate configuration and which can be elastically sprung open, for engaging behind the holding rib (4) after the insertion portion (3) has been pressed in, wherein the holding spring (2) can be introduced into the receiving space (6) through an opening (11) in the cylindrical wall (5) of the receiving housing (1) and to release the insertion portion (3) can be pressed in from the exterior in the opening region (11) of the housing wall (5), and wherein formed on the holding edges (17) are outwardly projecting support bodies (13) which in the installed condition for axially fixing the holding spring (2) in the receiving housing (1) engage into corresponding recesses (12) in the housing wall (5) and are held there with their end faces (21) which are also arcuate by the inside edge (22) of the recess (12) in opposite relationship to the insertion direction, characterised in that in the region of contact the end faces (21) are bevelled in the insertion direction outwardly relative to the vertical plane through an angle a of between 15° and 60°.

2. A releasable plug connection according to claim 1 characterised in that the angle α is between 25° and 45°.

3. A releasable plug connection according to claim 1 or claim 2 characterised in that the holding surfaces (19) of the holding edges (17), which bear against the holding rib (4), are bevelled outwardly in opposite relationship to the insertion direction so that the holding edges (17) are in contact as closely as possible to the bottom of the holding rib (4).

4. A releasable plug connection according to claim 1 or claim 2 characterised in that the inside edges (22) are rounded off or are provided with an inclined surface whose angle approximately corresponds to the angle α.

## Revendications

1. Système d'accouplement amovible destiné à recevoir une pièce tubulaire mâle (3) munie d'une nervure périphérique (4), se composant d'un élément récepteur cylindrique (1) définissant un logement d'emmanchement central (6) pour l'introduction de la pièce tubulaire mâle (3) et d'un ressort de retenue séparé (2, en matière plastique à cédage élastique dur, comprenant des arêtes de retenue (17) capables de se déformer par cédage élastique, orientées vers l'intérieur selon un tracé en arc de cercle, destinées à venir cramponner par derrière la nervure de retenue (4) après l'emmanchement de la pièce tubulaire mâle (3), le ressort de retenue (2) étant en l'occurrence destiné à être introduit, par une ouverture (11) ménagée dans la paroi (5) de l'élément récepteur cylindrique, dans le logement d'emmanchement (6) et, pour dégager la pièce tubulaire mâle (3), à être comprimé depuis l'extérieur dans la zone d'ouverture (11) de la paroi (5) de l'élément récepteur et des éléments d'appui (13) faisant saillie vers l'extérieur étant en l'occurrence réalisés solidaires par moulage des arêtes de retenue (17), qui, lorsque l'ensemble est à l'état accouplé, plongent, pour immobiliser dans le plan axial le ressort de retenue (2) dans l'élément récepteur (1), dans des évidements (12) ménagés en correspondance dans la paroi (5) de l'élément récepteur et sont maintenus dans cette position, au niveau de leurs faces antérieures (21), présentant également une configuration en forme d'arc de cercle, par l'arête intérieure (22) de l'évidement (12) dans le sens opposé à celui de l'emmanchement, caractérisé en ce que les faces antérieures (21) sont, dans la zone d'assise, dans le sens de l'emmanchement, biseautées vers l'extérieur par rapport au plan vertical en formant un angle a compris entre 15 et 60°.

2. Système d'accouplement amovible selon la revendication 1, caractérisé en ce que l'angle α se situe entre 25 et 45°.

3. Système d'accouplement amovible selon la revendication 1 ou 2, caractérisé en ce que les faces de retenue (19) des arêtes de retenue (17) contiguës à la nervure de retenue (4) sont biseautées vers l'extérieur dans le sens opposé à celui de l'emmanchement, ce qui fait que les arêtes de retenue (17) sont en appui aussi près du fond de la nervure de retenue (4) que faire se peut.

4. Système d'accouplement amovible selon la revendication 1 ou 2, caractérisé en ce que les arêtes intérieures (22) sont arrondies ou sont munies d'un chanfrein, dont l'angle d'inclinaison correspond sensiblement à l'angle α.
